# EUROPÄISCHE PATENTSCHRIFT

(11) **EP 0 751 100 B1**
(45) Veröffentlichungstag und Bekanntmachung des Hinweises auf die Patenterteilung: **11.03.1998**
(21) Anmeldenummer: 96109687.2
(22) Anmeldetag: 17.06.1996
(51) Int. Cl.: C03C 25/02, C08J 5/08

(54) **Schlichtezusammensetzung, beschlichtete Glasfasern sowie deren Verwendung**
Size composition, sized glass fibres and their use
Composition d'ensimage, fibres en verre ensimées et leur utilisation

(30) Priorität: 28.06.1995 DE 19523512
(43) Veröffentlichungstag der Anmeldung: 02.01.1997
(73) Patentinhaber: BAYER AG, 51368 Leverkusen (DE); BAYER ANTWERPEN N.V., 2040 Antwerpen (BE)
(72) Erfinder: Kirchmeyer, Stephan, Dr., 51275 Leverkusen (DE); Karbach, Alexander, Dr., 47800 Krefeld (DE); Audenaert, Raymond, Dr., 2000 Antwerpen (BE)
(74) Vertreter: Steiling, Lothar, Dr.

(56) Entgegenhaltungen:
- US-A- 3 909 477
- US-A- 4 104 434
- US-A- 4 448 917
- US-A- 4 489 131
- US-A- 4 615 946

## Beschreibung

Die vorliegende Erfindung betrifft Schlichtezusammensetzungen, beschlichtete Glasfasern sowie ihre Verwendung.

Bekanntermaßen werden die Eigenschaften von Verbunden aus Glasfasern und Polymeren in hohem Maße von der Scherfestigkeit zwischen Glasfaser und dem die Glasfaser umgebenden Polymeren, der sog. Polymermatrix beeinflußt. Die Aufgabe der Glasfaserschlichte besteht darin, diesen Verbund zwischen der Glasfaser und dem Matrixpolymer herzustellen und gleichzeitig die Herstell- und Verarbeitbarkeit der Glasfasern sicherzustellen. Als Schlichten werden Zusammensetzungen aus Wasser, einem polymeren Bindemittel (dem sog. Filmbildner), einem Haftvermittler, Gleitmitteln, Antistatika und weiteren Hilfsmitteln verwendet. Als Bindemittel verwendet man im allgemeinen organische, wasserdispergierbare oder lösliche Polyvinylacetat-, Polyester-, Polyesterepoxid-, Polyurethan-, Polyacrylat-, Polyolefinharze oder deren Mischungen.

Allgemein werden Filmbildner und Haftvermittler so gewählt, daß eine Affinität zwischen der Polymermatrix und dem Filmbildner besteht und so ein mechanischer Verbund zwischen Glasfaser und Polymermatrix hergestellt wird. Es versteht sich daher, daß die Rezepturen der Schlichten auf die jeweilige Polymermatrix optimiert werden müssen und daß die Eigenschaften der Verbunde empfindlich auf Veränderungen der Schlichtezusammensetzung reagieren.

In US 4 104 434 werden Gemische aus flüchtigen aliphatischen Säuren, z.B. Ameisensäure, und polyfunktionellen Säuren, z.B. Zitronensäure, zusammen mit wäßrigen Filmbildnern und Gleitmitteln zur Herstellung von Schlichten verwendet, um das Auswandern von Schlichtebestandteilen auf die Oberfläche der Glasfaserwickel während der Trocknung zu vermeiden.

US 3 909 477 beschreibt Schlichten für z.B. (Polyester-) Textilfasern, die aus einem säurehaltigen Copolymer und carbocyclischen Dicarbonsäuren mit sechs Kohlenstoffatomen bestehend und leicht von den Textilfasern entfernt werden können.

US 4 489 131 und US 4 448 917 beschreiben Schlichten für Glasfasern aus oxidierten Polyolefinen, weiteren Filmbildnern und organischen Säuren. Derartige Glasfasern sind zur Verstärkung von Polypropylen geeignet.

Ein grundsätzliches Problem ist die Alterung des Verbundes aus Glasfaser und Polymermatrix unter Wärme-, Licht- oder Hydrolyseeinfluß, die sich z.B. durch Verfärbungen und Abfall der mechanischen Festigkeiten bei Einfluß von Feuchtigkeit äußert. Alterungsverfärbungen sind insbesondere in unpigmentierten, glasfaserverstärkten Polymereinstellungen unerwünscht. Aufgrund der Vielfalt an chemischen Spezies in den Verbunden aus Glasfaser und Polymermatrix und aufgrund der Vielzahl der möglichen Verfärbungsmechanismen z.B. durch Hydrolyse, thermische oder photochemische Zersetzung ist das Problem der Verfärbung nur schwer zu lösen. In EP-B 28 942 wird versucht, durch eine ausgewogene Hydrophilie/Hydrophobiebilanz des Filmbildners das Problem der Hydrolyseanfälligkeit zu minimieren. In EP-B 201 691 wird vorgeschlagen, die mechanische Alterungsbeständigkeit von glasfaserverstärkten, thermoplastischen Polyestern durch Kombination von Epoxid- und Polyurethan-Filmbildnern mit zwei unterschiedlichen Silanen sowie einem speziell aufgebauten Gleitmittel zu verbessern. Verfärbungen bleiben jedoch durch diese Maßnahmen unbeeinflußt.

Aufgabe der vorliegenden Erfindung war es daher, Glasfasern zur Verfügung zu stellen, die in ihren allgemeinen Eigenschaften, also z.B. mechanischen und thermischen Eigenschaften im Polymerverbund, die Eigenschaften der bislang vorhandenen Glasfasern zumindest erreichen oder verbessern, sich gleichzeitig aber durch ein verbessertes Alterungsverhalten auszeichnen, insbesondere hinsichtlich von Verfärbungen.

Diese Aufgabe konnte überraschenderweise durch Schlichtezusammensetzungen bzw. damit hergestellten, beschlichteten Glasfasern gelöst werden, die neben Polyepoxid-, Polyester- oder Polyurethan-Filmbildnern, Amino- und/oder Epoxysilanen und weiteren üblichen Schlichtebestandteilen monomere, aromatische Di- oder Polycarbonsäuren enthalten.

Gegenstand der Erfindung sind Schlichtezusammensetzungen für Glasfasern, bestehend aus
a) 2 bis 20 Gew.-%, bevorzugt 4 bis 10 Gew. % Polyepoxid-, Polyester-, Polyvinylacetat- oder Polyurethan-Filmbildner,
b) 0,1 bis 10 Gew.-%, bevorzugt 0,3 bis 2 Gew. % organofunktionelle Silane,
c) 0,1 bis 20 Gew.-%, bevorzugt 0,5 bis 5 Gew. % monomere, aromatische Di- oder Polycarbonsäuren,
d) 0 bis 10 Gew.-%, bevorzugt 0,1 bis 5 Gew. % weitere übliche Schlichtebestandteile, die keine Polyolefindispersionen oder -emulsionen enthalten, und
e) Wasser als Rest auf 100 Gew. %.

Bevorzugt handelt es sich bei der Komponente (c) um Terephthalsäure oder Isophthalsäure.

Ein weiterer Gegenstand der Erfindung sind beschlichtete Glasfasern, die mit dem getrockneten Rückstand der erfindungsgemäßen Schlichtezusammensetzungen überzogen sind.

Die erfindungsgemäßen, beschlichteten Glasfasern werden zur Verstärkung von thermoplastischen und duroplastischen Polymeren, bevorzugt von thermoplastischen aromatischen Polyestern verwendet.

Die Alterungsbeständigkeit der erfindungsgemäßen Schlichten bzw. der damit beschlichteten Glasfasern im Verbund ist umso überraschender, da bisher kein das Alterungsverhalten stabilisierender Effekt durch monomere, aromatische Di- oder Polycarbonsäuren bekannt ist und vom Fachmann auch nicht zu erwarten war. Im Gegenteil, in EP-A 27 942 wird sogar davor gewarnt und davon abgeraten, ein Übermaß an hydrophilen Bestandteilen in die Schlichte einzubringen, da durch die sogenannte "Dochtwirkung" der Verbund aus Glasfaser und Polymermatrix gestört wird. Es war daher keinesfalls zu erwarten, daß die mit den erfindungsgemäßen Schlichten beschlichteten Glasfasern im Verbund ein besonders gutes bis ausgezeichnetes Alterungsverhalten aufweisen. Es war eher davon auszugehen, daß die erfindungsgemäßen Glasfasern ein allgemein schlechteres Eigenschaftsbild im Polymerverbund aufweisen würden als die bisher verwendeten. Dies ist jedoch nicht der Fall. Die erfindungsgemäßen Glasfasern zeichnen sich durch ein mindestens gleichwertiges Eigenschaftsbild gegenüber bekannten Glasfasern aus und besitzen zudem ein verbessertes Alterungsverhalten, insbesondere hinsichtlich Verfärbungen.

Zur Herstellung der erfindungsgemäßen, beschlichteten Glasfasern sind sowohl die für die Glasseidenfabrikation verwendeten, bekannten Glastypen, wie E-, A-, C- und S-Glas, als auch die bekannten Glasstapelfasererzeugnisse geeignet. Unter den genannten Glastypen für die Herstellung von Endlosglasfasern besitzen die E-Glasfasern aufgrund ihrer Alkalifreiheit, ihrer hohen Zugfestigkeit und ihrem hohen Elastizitätsmodul die größte Bedeutung für die Verstärkung von Kunststoffen.

Zur Beschlichtung der Glasfasern werden diese nach bekannten Verfahren mit der erfindungsgemäßen Schlichte aus
a) 2 bis 20 Gew.-%, bevorzugt 4 bis 10 Gew. % Polyepoxid-, Polyester-, Polyvinylacetat- oder Polyurethan-Filmbildner,
b) 0,1 bis 10 Gew.-%, bevorzugt 0,3 bis 2 Gew. % organofunktionelle Silane,
c) 0,1 bis 20 Gew.-%, bevorzugt 0,5 bis 5 Gew. % monomere, aromatische Di- oder Polycarbonsäuren,
d) 0 bis 10 Gew.-%, bevorzugt 0,1 bis 5 Gew. % weitere übliche Schlichtebestandteile, die keine Polyolefindispersionen oder -emulsionen enthalten, und
e) Wasser als Rest auf 100 Gew. %
versehen und danach getrocknet.

In der Schlichte können weitere Komponenten wie Emulgatoren, weitere filmbildende Harze, weitere Haftvermittler, Gleitmittel und Hilfsstoffe wie Netzmittel oder Antistatika enthalten sein. Die weiteren Haftvermittler, Gleitmittel und sonstigen Hilfsstoffe, Verfahren zur Herstellung der Schlichten, Verfahren zur Beschlichtung und Nachbearbeitung der Glasfasern sind bekannt und beispielsweise in K.L. Loewenstein, "The Manufacturing Technology of Continuous Glass Fibres", Elsevier Scientific Publishing Corp., Amsterdam, London, New York, 1983, beschrieben. Die Glasfasern können über beliebige Methoden beschlichtet werden, beispielsweise mit Hilfe geeigneter Vorrichtungen, wie z.B. Sprüh- oder Walzenapplikatoren. Auf die mit hoher Geschwindigkeit aus Spinndüsen gezogenen Glasfilamente können sofort nach ihrem Erstarren, d.h. noch vor dem Aufwickeln, Schlichten aufgetragen werden. Es ist aber auch möglich, die Fasern im Anschluß an den Spinnprozeß in einem Tauchbad zu beschlichten.

Als Polyepoxid-Filmbildner sind wasserdipergierte, eminlgierte oder in Wasser gelöste Epoxidharze geeignet. Es handelt sich dabei um unmodifizierte oder durch Amine, saure Gruppen oder hydrophil-nichtionische Gruppen modifizierte Epoxidharze auf der Basis von Diglycidylethern zweiwertiger Phenole wie Brenzkatechin, Resorcin, Hydrochinon, 4,4'-Dihydroxydiphenyldimethylmethan (Bisphenol A), 4,4'-Dihydroxy-3,3'-dimethyl-diphenylpropan, 4,4'-Dihydroxydiphenylsulfon, Glycidylestern zweiwertiger, aromatischer, aliphatischer und cycloaliphatischer Carbonsäuren wie beispielsweise Phthalsäureanhydridbisglycidylether oder Adipinsäurebisglycidylether, Glycidylethern zweiwertiger, aliphatischer Alkohole wie Butandiolbisglycidylether, Hexandiolbisglycidylether oder Polyoxyalkylenglykolbisglycidylether sowie Polyglycidylethern polywertiger Phenole, beispielsweise von Novolaken (Umsetzungsprodukte von ein oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan, Epoxid-Verbindungen auf der Basis von aromatischen Aminen und Epichlorhydrin, beispielsweise Tetraglycidylmethylendianilin, N-Diepoxypropyl-4-aminophenylglycidylether, Glycidylestern mehrwertiger, aromatischer, aliphatischer und cycloaliphatischer Carbonsäuren, Glycidylethern mehrwertiger Alkohole, beispielsweise von Glycerin, Trimethylolpropan und Petaerythrit und weiteren Glycidylverbindungen wie Trisglycidylisocyanurat. Als chemische Modifizierungen ist beispielsweise die Addition von Aminen oder die Addition von hydrophilen Polyethern, z.B. Polyethylenglykolen geeignet. Geeignete Polyepoxid-Dispersionen sind z.B. in EP-A 27 942, EP-A 311 894, US 3 249 412, US 3 449 281, US 3 997 306 und US 4 487 797 beschrieben. Bevorzugt werden in Wasser dispergierte, emulgierte oder gelöste Polyesterepoxide auf Basis von Bisphenol A und Novolaken.

Polyurethan-Filmbildner sind in Wasser dispergierte, emulgierte oder gelöste Reaktionsprodukte von bevorzugt difunktionellen Polyisocyanaten mit bevorzugt difunktionellen Polyolen und gegebenenfalls bevorzugt difunktionellen Polyaminen. Die Synthese von Polyurethan-Dispersionen, verwendbare Bausteine, die Herstellverfahren und ihre Eigenschaften sind dem Fachmann bekannt und beispielsweise in Houben-Weyl "Methoden der organischen Chemie", Band E 20, herausgegeben von H. Bartl und J. Falbe, Georg Thieme Verlag Stuttgart, New York 1987 auf den Seiten 1587 bis 1604, 1659 bis 1681, 1686 bis 1689 beschrieben.

Geeignete Isocyanate sind aliphatische, cycloaliphatische, araliphatische, aromatische und heterocyclische Polyisocyanate oder beliebige Gemische dieser Polyisocyanate, wie z.B 1,6-Hexamethylendiisocyanat, 1-Isocyanato-3,3,5-trimethyl-5-isocyanatomethyl-cyclohexan, 2,4- und 2,6-Toluylendiisocyanat, Diphenylmethan-2,4'- und/oder -4,4'-diisocyanat.

Geeignete Polyole sind Polyester, also z.B. Umsetzungsprodukte von vorzugsweise zweiwertigen Polyalkoholen wie z.B. Ethylenglykol, Propylenglykol, Butylenglykol und Hexandiol mit vorzugsweise zweiwertigen Polycarbonsäuren oder deren veresterungsfähigen Derivaten wie z.B Bernsteinsäure, Adipinsäure, Phthalsäure, Phthalsäureanhydrid, Maleinsäure und Maleinsäureanhydrid. Auch Polyester aus Lactonen, z.B. ε-Caprolacton sind einsetzbar. Weiterhin sind Polyether geeignet, hergestellt z.B. durch Polymerisation von Epoxiden wie z.B. Ethylenoxid, Propylenoxid oder Tetrahydrofuran mit sich selbst oder durch Anlagerung der Epoxide an Startkomponenten mit reaktionsfähigen Wasserstoffatomen wie Wasser, Alkohole, Ammoniak oder Amine.

Als sogenannte Kettenverlängerer, d.h. vorzugsweise difunktionelle Polyole oder Polyamine mit einem Molekulargewicht von kleiner als 400 werden besonders bevorzugt: zweiwertige Polyalkohole wie Ethylenglykol, Propylenglykol, Butylenglykol, Aminoalkohole wie Ethanolamin, N-Methyldiethanolamin, sowie difunktionelle Polyamine wie z.B. Ethylendiamin, 1,4-Tetramethylendiamin, Hexamethylendiamin, 1-Amino-3,3,5-trimethyl-5-aminomethylcyclohexan, Bis-(3-aminopropyl)methylamin und Hydrazin.

Auch Epoxidgruppen oder verkappte Isocyanatgruppen (z.B. EP-A 137 427) aufweisende Polyurethan-Dispersionen, -Emulsionen oder -Lösungen sind geeignet.

Polyester-Dispersionen sind bevorzugt Umsetzungsprodukte aus den vorgenannten Polyepoxiden mit den vorgenannten Polycarbonsäuren, bzw. carboxylgruppenhaltigen Polyestern (z.B. EP-A 27 942) die keine Epoxidgruppen mehr enthalten. Auch die in US 5 086 101 beschriebenen Phenoxyharze zählen zu den Polyestern und sind geeignet.

Geeignete organofunktionelle Silane (b) sind beispielsweise 3-Aminopropyltrimethoxysilan, 3-Aminopropyltriethoxysilan, 3-Aminopropyltris-methoxy-ethoxysilan, 3-Aminopropyl-methyl-diethoxysilan, N-2-Aminoethyl-3-aminopropyltrimethoxysilan, N-2-Aminoethyl-3-aminopropyl-methyl-dimethoxysilan und N-Methyl-3-aminopropyltrimethoxysilan, 3-Glycidyloxypropyltrimethoxysilan, 3-Methacryloxypropyltrimethoxysilan, 3-Mercaptopropyltrimethoxysilan, Vinyltriethoxysilan oder Vinyltrimethoxysilan.

Geeignete aromatische Di- oder Polycarbonsäuren (c) sind z.B. gegebenenfalls substituierte Phthalsäuren, Isophthalsäuren, Terephthalsäuren, Benzoltricarbonsäuren, Benzoltetracarbonsäuren, Naphthalindi-, -tri- und tetracarbonsäuren, Phenyldiessigsäuren und Zimtsäuren sowie Anhydride dieser Säuren.

Zusätzlich können weitere Schlichtekomponenten (d) wie anionische, kationische oder nichtionische Emulgatoren, weitere filmbildende Harze, Gleitmittel wie z.B. Polyalkylenglykolether von Fettalkoholen oder Fettaminen, Polyalkylenglykolester und Glycerinester von Fettsäuren mit 12 bis 18 C-Atomen, Polyalkenylglykole höherer Fettsäureamide mit 12 bis 18 C-Atomen von Polyalkylenglykolen und/oder Alkenylaminen, quartäre Stickstoffverbindungen z.B. ethoxylierte Imidazoliniumsalze, Mineralöle oder Wachse und Hilfsstoffe wie Netzmittel oder Antistatika wie z.B. Lithiumchlorid oder Ammoniumchlorid in den Schlichten enthalten sein. Diese weiteren Hilfsstoffe sind dem Fachmann bekannt und beispielsweise in K.L. Loewenstein, "The Manufacturing Technology of Continuous Glass Fibres", Elsevier Scientific Publishing Corp., Amsterdam, London, New York, 1983, beschrieben.

In der Schlichtekomponente (d) sind keine Polyolefindispersionen oder -emulsionen enthalten.

Die erfindungsgemäßen Glasfasern sind als Verstärkungsfasern für thermoplastische Polymere wie z.B. Polycarbonat, Polyamid-6 und Polyamid-6,6, aromatische Polyester wie Polyethylenterephthalat und Polybutylenterephthalat, Polyurethane oder Polyarylensulfide sowie duroplastische Polymere wie ungesättigte Polyesterharze, Epoxidharze und Phenol-Formaldehydharze geeignet.

Bevorzugt werden die erfindungsgemäßen Glasfasern als Verstärkungsfasern für aromatische Polyester, ganz besonders bevorzugt für Polyethylenterephthalat und Polybutylenterephthalat verwendet.

Die Verwendung der erfindungsgemäß beschlichteten Glasfasern zur Verstärkung von Polyolefinen ist weniger bevorzugt.

Die vorliegende Erfindung soll anhand der nachfolgenden Ausführungsbeispiele näher erläutert werden.

### Beispiele

### Beispiele 1 und 2 (Herstellung der erfindungsgemäßen beschlichteten Glasfasern) und Vergleichsbeispiel

Schlichten (s. Tabelle 1) werden über einen Kiss-rollapplikator auf Glasfasern mit einem Durchmesser von 10 µm aufgebracht. Die Glasfasern werden zu Cakes (Bobinen) gewickelt und anschließend 10 Stunden bei 130°C getrocknet. Die Glasfasern werden nach der Trocknung in 4,5 mm lange Chops geschnitten.

**Tabelle 1**

| Schlichtekomponenten Mengenangaben in [Gew.-%] | Beispiel 1 | Beispiel 2 | Vergleich |
|---|---|---|---|
| Epoxiddispersion gemäß EP-A 27942, Beispiel 3a | 4,5 | 4,5 | 4,5 |
| Polyurethan-Dispersion (Baybond® PU 0401, Handelsprodukt der Fa. Bayer AG, Leverkusen) | 1,5 | 1,5 | 1,5 |
| 3-Aminopropyltriethoxysilan | 0,5 | 0,5 | 0,5 |
| 3-Glycidyloxypropyltrimethoxysilan | - | 0,5 | 0,5 |
| Terephthalsäure | 2,2 | 0,5 | - |
| Gleitmittel (Polyalkylenglykol) | 0,5 | 0,5 | 0,5 |
| Wasser | 90,8 | 92,0 | 92,5 |
| Schlichteauftrag (Bestimmung durch Glühverlust) | 0,88 | 0,82 | 0,80 |

### Beispiel 3 (Verwendung der erfindungsgemäßen, beschlichteten Glasfasern)

70 Gew.Teile Polybutylenterephthalat (Pocan 1200, Handelsprodukt der Fa. Bayer AG, Leverkusen) und 30 Gew.Teile Glasfasern aus Beispiel 1 und 2 bzw. dem Vergleichsbeispiel werden auf einem Extruder bei einer Extrudertemperatur von 250°C zu einer Formmasse extrudiert und granuliert. Von den Formmassen werden auf einer üblichen Spritzgußmaschine 80 x 10 x 4 mm-Prüfstäbe und Zugstäbe hergestellt. Geprüft werden Biegefestigkeit nach DIN 53452, Zugfestigkeit nach DIN 53455 sowie die Schlagzähigkeit bei Raumtemperatur nach Izod (ISO 180/IC).

Spritzgießlinge werden bei 180°C unter Luftatmosphäre gelagert (Heißluftalterung). Nach bestimmten Zeiten wird die Helligkeitsdifferenz zu einer nichtgealterten Probe nach DIN 5033 bestimmt.

**Tabelle 2**

| Verwendung von | Biegefestigkeit in [MPa] | Zugfestigkeit in [MPa] | Schlagzähigkeit in [kJ/m²] |
|---|---|---|---|
| Glasfasern aus Beispiel 1 | 253 | 163 | 52 |
| Glasfasern aus Beispiel 2 | 248 | 160 | 49 |
| Glasfasern aus dem Vergleichsbeispiel | 245 | 160 | 49 |
| handelsübliche Glasfaser, empfohlen zur Verstärkung von Polybutylenterephthalat | 243 | 158 | 48 |

**Tabelle 3**

| (Heißluftalterung) | | | | |
|---|---|---|---|---|
| [Stunden] | Helligkeitsdifferenz zu einer nichtgealterten Probe gemäß DIN 5033 (positive Werte: Probe ist heller als Vergleichsprobe, negative Werte: Probe ist dunkler als Vergleichsprobe) | | | |
| | Beispiel 1 | Beispiel 2 | Vergleich | handelsübliche Glasfaser |
| 0 | 0 | 0 | 0 | 0 |
| 9 | -2,6 | -2,9 | -3,2 | -7,1 |
| 25 | -4 | -4,1 | -5,5 | -11,1 |
| 120 | -6,8 | -7,5 | -10,4 | -17,2 |
| 200 | -7,7 | -8,3 | -12,1 | -19,6 |
| 500 | -11,2 | -11,3 | -15,7 | -21,5 |
| 800 | -12,5 | -13,4 | -17,9 | -22,9 |
| 1632 | -15,5 | -16,9 | -19,9 | -24,7 |
| 2020 | -15,2 | -16,5 | -20,2 | -24,2 |
| 2480 | -16,1 | -17,2 | -20,3 | -23,4 |

## Patentansprüche

1. Schlichtezusammensetzung für Glasfasern, bestehend aus
a) 2 bis 20 Gew.-%, bevorzugt 4 bis 10 Gew. % Polyepoxid-, Polyester-, Polyvinylacetat- oder Polyurethan-Filmbildner,
b) 0,1 bis 10 Gew.-%, bevorzugt 0,3 bis 2 Gew. % organofunktionelle Silane,
c) 0,1 bis 20 Gew.-%, bevorzugt 0,5 bis 5 Gew. % monomere, aromatische Di- oder Polycarbonsäuren,
d) 0 bis 10 Gew.-%, bevorzugt 0,1 bis 5 Gew. % weitere übliche Schlichtebestandteile, die keine Polyolefindispersionen oder - emulsionen enthalten, und
e) Wasser als Rest auf 100 Gew. %.

2. Schlichtezusammensetzung gemäß Anspruch 1, dadurch gekennzeichnet, daß es sich bei der Komponente (c) um Terephthalsäure oder Isophthalsäure handelt.

3. Beschlichtete Glasfasern, die mit dem getrockneten Rückstand der Schlichtezusammensetzung gemäß Anspruch 1 oder 2 überzogen sind.

4. Verwendung der beschlichteten Glasfasern gemäß Anspruch 3 zur Verstärkung von thermoplastischen und duroplastischen Polymeren, bevorzugt von thermoplastischen aromatischen Polyestern.

## Claims

1. Size compositions for glass fibres consisting of
a) 2 to 20 wt.%, preferably 4 to 10 wt.% of polyepoxide, polyester, polyvinyl acetate or polyurethane film formers,
b) 0.1 to 10 wt.%, preferably 0.3 to 2 wt.%, of organo-functional silanes,
c) 0.1 to 20 wt.%, preferably 0.5 to 5 wt.% of monomeric, aromatic di- or polycarboxylic acids,
d) 0 to 10 wt.%, preferably 0.1 to 5 wt.% of further conventional size constituents which contain no polyolefin dispersions or emulsions and
e) water to make up to 100 wt.%.

2. Size composition according to claim 1, characterised in that component (c) is terephthalic acid or isophthalic acid.

3. Sized glass fibres which are coated with the dried residue of the size compositions according to claim 1 or 2.

4. Use of the sized glass fibres according to claim 3 for reinforcing thermoplastic and thermoset polymers, preferably thermoplastic aromatic polyesters.

## Revendications

1. Composition d'ensimage pour des fibres de verre, constituées de
a) de 2 à 20% en poids, de préférence de 4 à 10 % en poids d'agent formant un film de polyépoxyde, de polyester, de poly(acétate de vinyle) ou de polyuréthane,
b) de 0,1 à 10 % en poids, de préférence de 0,3 à 2 % en poids de silanes organofonctionnels,
c) de 0,1 à 20 % en poids, de préférence de 0,5 à 5 % en poids d'acides di- ou polycarboxyliques monomères aromatiques,
d) de 0 à 10% en poids, de préférence de 0,1 à 5 % en poids d'autres constituants d'ensimages classiques qui ne contiennent pas de dispersions ou d'émulsions de polyoléfines, et
e) d'eau en tant que reste jusqu'à 100 % en poids.

2. Composition d'ensimage selon la revendication 1, caractérisée en ce qu'il s'agit pour le constituant (c) d'acide téréphtalique ou d'acide isophtalique.

3. Fibres de verre ensimées qui sont recouvertes avec le résidu séché de la composition d'ensimage selon la revendication 1 ou 2.

4. Utilisation des fibres de verre ensimées selon la revendication 3 pour le renforcement de polymères thermoplastiques et thermodurcissables, de préférence de polyesters aromatiques thermoplastiques.
